# EUROPÄISCHE PATENTSCHRIFT

(11) **EP 3 384 743 B1**
(45) Veröffentlichungstag und Bekanntmachung des Hinweises auf die Patenterteilung: **13.09.2023**
(21) Anmeldenummer: 17700104.7
(22) Anmeldetag: 03.01.2017
(51) Int. Cl.: H05K 7/14, B60T 13/66, B60T 15/02, B60T 17/04

(54) **BREMSSTEUERANORDNUNG UND VERFAHREN ZUR BILDUNG EINER BREMSSTEUERANORDNUNG**
BRAKE CONTROL ASSEMBLY AND METHOD FOR BUILDING THE BRAKE CONTROL ASSEMBLY
DISPOSITIF DE COMMANDE DE FREIN ET PROCÉDÉ DE FORMATION DU DISPOSITIF DE COMMANDE DE FREIN

(30) Priorität: 27.01.2016 DE 102016000760
(43) Veröffentlichungstag der Anmeldung: 10.10.2018
(73) Patentinhaber: Siemens Mobility GmbH, 81739 München (DE)
(72) Erfinder: KLUTH, Wolfgang, 90518 Altdorf (DE); REINICKE, Stefan, 85304 Ilmmünster (DE)
(74) Vertreter: Siemens Patent Attorneys
(86) Internationale Anmeldenummer: PCT/EP2017/050064
(87) Internationale Veröffentlichungsnummer: WO 2017/129380

(56) Entgegenhaltungen:
- EP-A1- 0 025 626
- EP-A2- 0 338 259
- EP-A2- 0 829 404
- WO-A1-2006/045489
- WO-A1-2010/034476
- WO-A1-2010/034477
- DE-A1- 19 715 528
- DE-A1- 19 908 617
- DE-A1-102008 009 217
- DE-U1- 29 704 307
- US-A- 6 098 006

## Beschreibung

Die Erfindung liegt auf dem Gebiet des Betriebes von Bremsen, insbesondere der Steuerung von Bremsen für Schienenfahrzeuge.

Aus der Druckschrift DE 199 08 617 A1 ist eine Bremstafel zur Durchführung einer Bremssteuerung für Lokomotiven bekannt. Bei dieser sind einzelne Module benachbart in der Art einer Tafel angeordnet und die Bremskomponenten eines jeweiligen Moduls sind mittels einer Leitungsmatrix in einem definierten funktionalen Zusammenhang zu einer Funktionseinheit pneumatisch verbunden. Die Module weisen ihrerseits an einander zugeordneten korrespondierenden Seiten und/oder an Frontseiten wahlweise aktivierbare Zugangsöffnungen zur Herstellung von Verbindungen zwischen den Modulen auf, wobei die Verbindungen durch direkte Zuordnung mit Abdichtungen oder durch gesonderte Rohrverbindungen herstellbar sind. Änderungen eines jeweiligen Moduls, die für eine Änderung des Bremskonzeptes bzw. der Bremsfunktion des Moduls oder auch für eine Änderung des prinzipiellen Bremskonzeptes bzw. der prinzipiellen Bremsfunktion der gesamten Bremstafel notwendig sein können, erfordern hier zumindest eine Neukonstruktion der Funktionseinheit des jeweiligen Moduls und der Leitungsmatrix des Moduls, in die diese Funktionseinheit integriert ist.

Die Erfindung betrifft eine Bremssteueranordnung, insbesondere für Schienenfahrzeuge,
- bei welcher eine Schaltung eine fluidische Leitungsmatrix, an die fluidische Leitungsmatrix angeschlossene Bremskomponenten und zumindest eine Schnittstelle zum Anschließen eines Verteilerblockes, welche derart gestaltet ist, dass durch Anschließen oder Austauschen des Verteilerblockes eine Konfiguration der fluidischen Leitungsmatrix ausbildbar ist, aufweist,
   - wobei die zumindest eine Schnittstelle durch Anschlüsse der fluidischen Leitungsmatrix ausgebildet ist,
   - wobei die fluidische Leitungsmatrix von einer Bremstafel, insbesondere in Form einer Rohrtafel oder einer Bohrtafel oder einer Klebetafel, gebildet ist, wobei an einer der Seiten, insbesondere an der Frontseite oder an der Rückseite, der Bremstafel die zumindest eine Schnittstelle mit ihren Anschlüssen ausgebildet ist, und
   - wobei die fluidische Leitungsmatrix zusätzlich zu den Anschlüssen, durch welche die zumindest eine Schnittstelle gebildet ist, auch Anschlüsse zum Anschließen der Bremskomponenten aufweist, wobei die Anschlüsse zum Anschließen der Bremskomponenten jeweils an einer der Seiten, insbesondere an der Frontseite, der Bremstafel, ausgebildet sind,
- bei welcher zumindest der eine Verteilerblock bereitgestellt ist, welcher durch Anschließen an die zumindest eine Schnittstelle der Schaltung zum Ausbilden der einen Konfiguration der fluidischen Leitungsmatrix der Schaltung geeignet ausgebildet ist, und
- bei welcher der zumindest eine Verteilerblock an die zumindest eine Schnittstelle der Schaltung angeschlossen ist, wodurch die eine Konfiguration der fluidischen Leitungsmatrix der Schaltung durch den Verteilerblock ausgebildet ist.

Eine gattungsgemäße Bremssteueranordnung ist beispielsweise aus der Druckschrift DE 197 15 528 A1 bekannt, bei welcher mit Steuergeräten versehene Einzelmodulen vorgesehen sind, wobei eine Interaktion zwischen den Einzelmodulen als Pneumatikbus ausgestaltet werden kann, wobei der Pneumatikbus aus Mehrrohrprofilen gebildet sein kann.

Weiterhin ist aus der Druckschrift WO 2010/034476 A1 eine Ventilanordnung einer pneumatischen Bremsanlage bekannt, bei der Trägermodule, die einheitlich eingebrachte interne Kanäle ausweisen, mit Steuerventilen bzw. Druckschaltern ausgestattet sind. Dabei gestattet ein Stopfenelement die Anpassung der Kanalführung an die Ventilfunktion.

Außerdem ist aus der Druckschrift WO 2006/045489 A1 ein aus Modulen mit elektrischen und/oder pneumatischen Komponenten aufgebaute elektro-pneumatische Zentraleinheit eines Nutzfahrzeugs bekannt.

Der Erfindung liegt die Aufgabe zu Grunde, Änderungen von Bremskonzepten bzw. von Bremsfunktionen leichter umsetzen zu können.

Gelöst wird diese Aufgabe durch eine Bremssteueranordnung mit den Merkmalen des Anspruchs 1, bei welcher
- der zumindest eine Verteilerblock ein vor dem Anschließen an die zumindest eine Schnittstelle aus einem Verteilersatz ausgewählter Verteilerblock ist,
- wobei der Verteilersatz zusätzlich zu dem zumindest einen Verteilerblock zumindest einen weiteren Verteilerblock aufweist, welcher durch Anschließen an die zumindest eine Schnittstelle der Schaltung zum Ausbilden einer von der einen Konfiguration verschiedenen, weiteren Konfiguration der fluidischen Leitungsmatrix der Schaltung geeignet ausgebildet ist.

Es wird als vorteilhaft angesehen, wenn die fluidische Leitungsmatrix zusätzlich zu den Anschlüssen, durch welche die zumindest eine Schnittstelle gebildet ist, auch Anschlüsse zum Anschließen der Schaltung zugeordneter Verbindungsleitungen aufweist, wobei die Anschlüsse zum Anschließen der Schaltung zugeordneter Verbindungsleitungen jeweils an einer der Seiten der Bremstafel ausgebildet sind.

Besonders vorteilhaft ist es, wenn der Verteilerblock als ein passives Bauteil ausgebildet ist - wenn der Verteilerblock also keine Steuerungsfunktion besitzt.

Vorzugsweise ist der Verteilerblock einstückig, insbesondere durch ein 3D-Druckverfahren, hergestellt. Unter einstückig hergestellt wird dabei verstanden, dass er entweder als ein einziges Teil gefertigt ist oder dass - wenn er aus mehreren Teilen gefertigt ist - seine Teile betriebsmäßig untrennbar zu einem Stück miteinander verbunden, beispielsweise verklebt, sind.

Vorteilhaft ist es, wenn jeder der Verteilerblöcke des Verteilersatzes eine in den Verteilerblock eingearbeitete Kanalmatrix mit Kanalanschlüssen zum Anschließen an zugeordnete Anschlüsse der fluidischen Leitungsmatrix der Schaltung aufweist.

Zur Umsetzung bevorzugter Bremskonzepte bzw. Bremsfunktionen wird es als vorteilhaft angesehen, wenn bei jedem der Verteilerblöcke des Verteilersatzes zumindest zwei der Kanalanschlüsse über einen Verbindungskanal der Kanalmatrix verbunden sind und bei zumindest einem der Verteilerblöcke zwei weitere der Kanalanschlüsse über einen weiteren Verbindungskanal der Kanalmatrix verbunden sind oder zumindest ein weiterer der Kanalanschlüsse blind ausgebildet, insbesondere mit einem Blindkanal der Kanalmatrix verbunden, ist.

Es wird als vorteilhaft angesehen, wenn eine erste Schnittstelle und ein an die erste Schnittstelle angeschlossener erster Verteilerblock als einander zugeordnete Mittel zur Bereitstellung einer Konfiguration von Strömungspfaden für die von einem Bremsluftbehälter als Versorgungsluft bereitgestellte Druckluft ausgebildet sind.

Weiterhin wird es als vorteilhaft angesehen, wenn eine zweite Schnittstelle und ein an die zweite Schnittstelle angeschlossener zweiter Verteilerblock als einander zugeordnete Mittel zur Bereitstellung einer Konfiguration von Strömungspfaden für die von einem Steuerventil bereitgestellte Vorsteuerdruckluft ausgebildet sind.

Außerdem wird es als vorteilhaft angesehen, wenn eine dritte Schnittstelle und ein an die dritte Schnittstelle angeschlossener dritter Verteilerblock als einander zugeordnete Mittel zur Bereitstellung einer Konfiguration von Strömungspfaden für Druckluft, die als Versorgungsluft für angeschlossene Steuerungen und/oder Bremsdruckregler bereitgestellt ist, ausgebildet sind.

Ferner wird es als vorteilhaft angesehen, wenn eine vierte Schnittstelle und ein an die vierte Schnittstelle angeschlossener vierter Verteilerblock als einander zugeordnete Mittel zur Bereitstellung einer Konfiguration von zumindest einem weiteren Strömungspfad für Druckluft, die als Versorgungsluft für angeschlossene Steuerungen und/oder Bremsdruckregler bereitgestellt ist, ausgebildet sind.

Die Erfindung betrifft auch ein Schienenfahrzeug mit einer erfindungsgemäßen Bremssteueranordnung, wobei es als vorteilhaft angesehen wird, wenn die Bremssteueranordnung als Teil einer Bremsgerätetafel, insbesondere als Modul einer Bremsgerätetafel ausgebildet ist.

Auch betrifft die Erfindung ein Verfahren zur Bildung einer Bremssteueranordnung, insbesondere für Schienenfahrzeuge, mit den Merkmalen des Anspruchs 13.

Die Erfindung ist im Weiteren anhand von Figuren näher erläutert. Dabei zeigen die
- Figur 1: eine schematische Darstellung eines Ausschnitts eines Schienenfahrzeugs mit einer elektropneumatischen Bremsgerätetafel als Teil einer Einheit zur Steuerung von Bremszylinderdrücken, die
- Figur 2: ein zum Konfigurieren vorbereitetes Basismodul für die Bremsgerätetafel gemäß Figur 1 mit einer erfindungsgemäßen Schaltung, die eine fluidische Leitungsmatrix und an die fluidische Leitungsmatrix angeschlossene Bremskomponenten aufweist, die
- Figuren 3 bis 6: vier Ausführungsbeispiele der aus mehreren Modulen gebildeten Bremsgerätetafel, bei denen mittels Sets von Verteilerböcken Konfigurationen einer fluidischen Leitungsmatrix zumindest eines der Module und damit Modul-Konfigurationen des zumindest einen Moduls ausgebildet sind, die
- Figuren 7 bis 10: vier Verteilersätze zur Ausbildung verschiedener Modul-Konfigurationen und die
- Figur 11: eine alternative Ausführungsform zu dem Verteilersatz gemäß Figur 10.

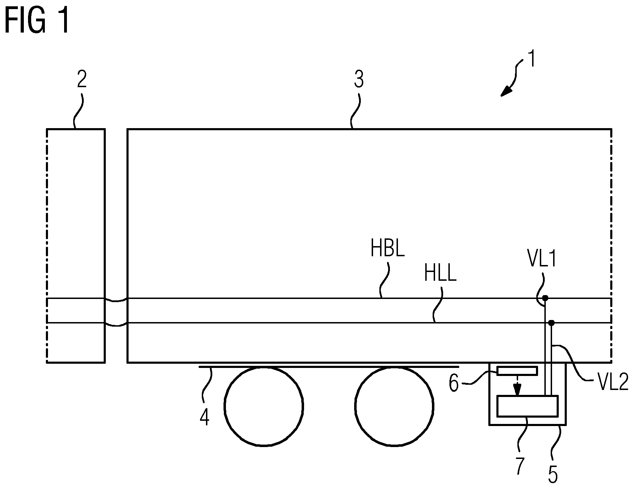

Der in der Figur 1 gezeigte Ausschnitt eines erfindungsgemäßen Schienenfahrzeugs 1 zeigt einen Teil eines Triebwagens 2 und einen Teil eines Laufwagens 3. In dem gezeigten Ausschnitt ist mit 4 ein Drehgestell des Laufwagens und mit 5 eine Einheit 5 des Laufwagens bezeichnet, wobei die Einheit 5 zur Steuerung von Bremszylinderdrücken von in der Figur 1 nicht gezeigten Bremszylindern des Laufwagens 3 dient.

Die Steuerung der Bremszylinderdrücke der Bremszylinder des Laufwagens 3 erfolgt vorzugsweise drehgestellweise, wenn das Schienenfahrzeug 1 ein Hochgeschwindigkeitsfahrzeug ist.

Alternativ hierzu kann die Steuerung der Bremszylinderdrücke der Bremszylinder des Laufwagens 3 wagenweise erfolgen, vorzugsweise wenn das Schienenfahrzeug 1 ein Commuter- oder Regionalfahrzeug ist.

Durch die Wagen 2, 3 des Schienenfahrzeugs 1 verlaufen eine Hauptluftleitung HLL und eine Hauptbehälterluftleitung HBL.

Die Einheit 5 zur Steuerung von Bremszylinderdrücken weist eine elektronische Bremssteuergeräteanordnung 6 und eine Bremsgerätetafel 7 auf, wobei die Bremssteuergeräteanordnung 6 zur Ansteuerung von elektrisch ansteuerbaren Komponenten der Bremsgerätetafel 7 dient.

Die Bremsgerätetafel 7 ist mittels einer Verbindungsleitung VL1 an die Hauptluftleitung HLL und mittels einer Verbindungsleitung VL2 an die Hauptbehälterluftleitung HBL angeschlossen.

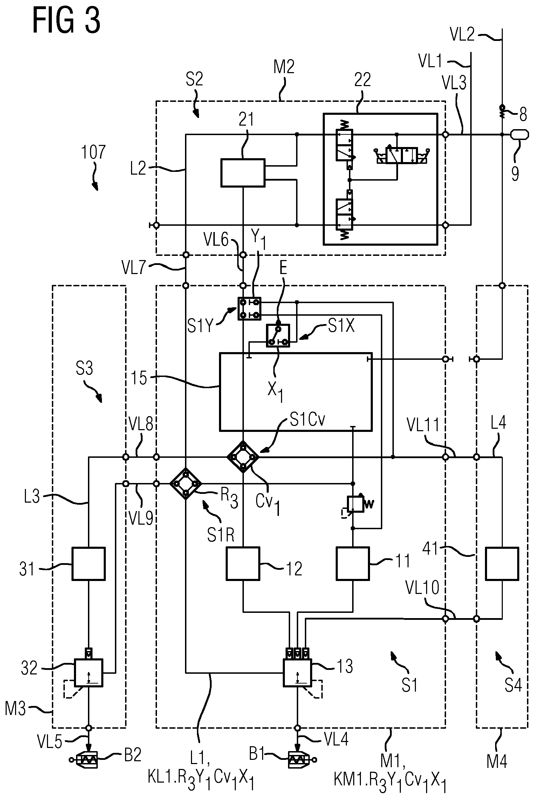

Wie im Weiteren noch anhand der Figuren 3 bis 6 gezeigt ist, besteht die Bremsgerätetafel 7 in verschiedenen Ausführungsformen, die für verschiedene Ausführungsformen von Wagen (Laufwagen, Triebwagen, etc.) bzw. verschiedene Ausführungsformen des Schienenfahrzeugs (Hochgeschwindigkeitsfahrzeug, Commuterfahrzeug, Regionalfahrzeug, etc.) vorgesehenen sind, jeweils aus mehreren Modulen. Dabei zeigen die Figuren 3 bis 6 lediglich beispielhaft vier der Ausführungsformen, die mit 107, 207, 307 bzw. 407 bezeichnet sind.

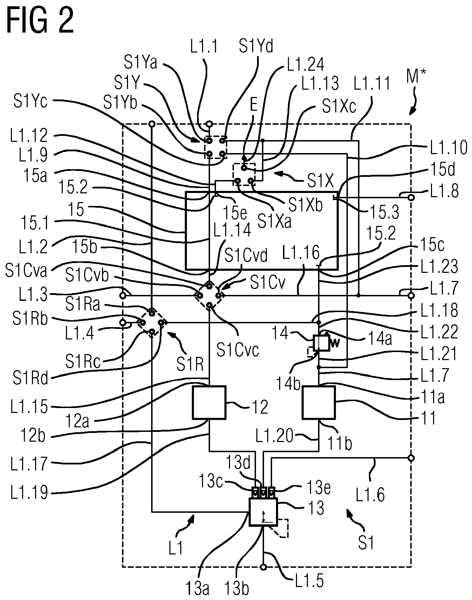

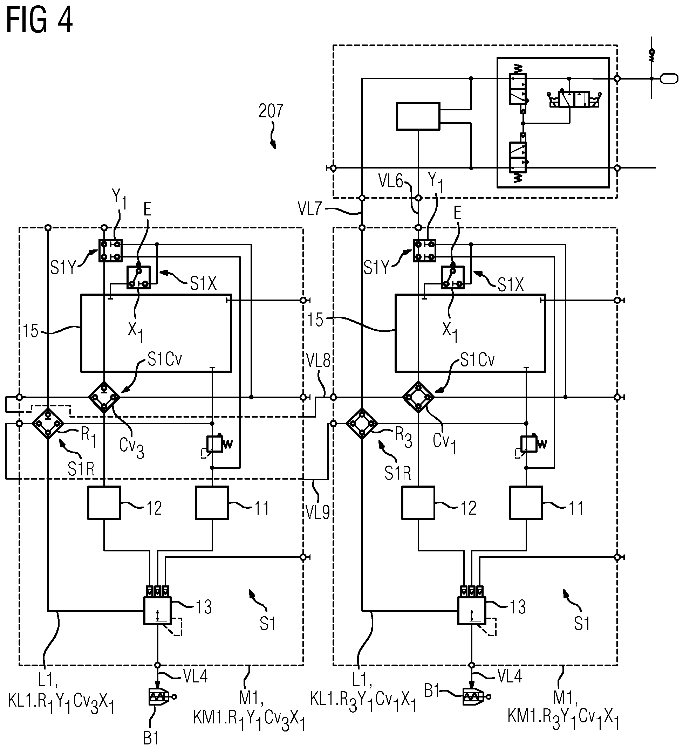

Bei den gezeigten Ausführungsformen 107, 207, 307 und 407 der Bremsgerätetafel 7 ist jeweils ein Modul (eine Bremssteueranordnung) als eine Modul-Konfiguration KM1.RᵢYⱼCvₖXₗ des in der Figur 2 gezeigten Basismoduls M1* ausgebildet. Bei der in der Figur 4 gezeigten Ausführungsform 207 ist ein weiteres Modul M1 als eine Modul-Konfiguration des Basismoduls M1* ausgebildet.

Gemäß Figur 2 weist das Basismodul M1* eine Schaltung S1 auf, auf Basis derer mittels verschiedener Sets von Verteilerblöcken Rᵢ, Yⱼ, Cvₖ und Xₗ verschiedene Modul-Konfigurationen des Basismoduls M1* ausgebildet werden können. Die Verteilerblöcke sind im Weiteren auch als "Konfiguratoren" bezeichnet.

Die verschiedenen Modul-Konfigurationen des Basismoduls M1* sind bei ihrem Einsatz bei einer jeweiligen Ausführungsform des Schienenfahrzeugs 1 Teil eines direkt wirkenden Bremssystems. Daher wird jede KM1.RₖYⱼCvₖXₗ der gezeigten Modul-Konfigurationen des Basismoduls M1* im Weiteren auch als "Modul_Direkte_Bremse" bezeichnet. Das Modul_Direkte_Bremse ist in den Figuren 3 bis 6 jeweils mit dem Bezugszeichen M1 versehen.

Gemäß Figur 2 weist die Schaltung S1 eine fluidische Leitungsmatrix L1 in Form einer pneumatischen Leitungsmatrix mit Leitungsabschnitte L1.1 bis L1.24 auf, wobei das freie Ende des Leitungsabschnitts L1.24 mit einer Entlüftung E ins Freie ausgebildet ist.

Weiterhin weist die Schaltung S1 Bremskomponenten 11, 12, 13, 14, 15 auf, die mittels Anschlüssen 11a, 11b, 12a, 12b, 13a bis 13e, 14a, 14b und 15a bis 15e an hier nicht bezeichnete Anschlüsse der fluidischen Leitungsmatrix L1 angeschlossen sind. Die Bremskomponente 11 ist ein erster direkt wirkender Bremsdruckregler. Die Bremskomponente 12 ist ein zweiter direkt wirkender Bremsdruckregler. Die Bremskomponente 13 ist ein als Druckumsetzer wirkendes erstes Relaisventil. Die Bremskomponente 14 ist ein Druckminderventil, insbesondere für die Luftversorgung des ersten Bremsdruckreglers 11 oder für die Luftversorgung beider Bremsdruckregler 11, 12. Die Bremskomponente 15 ist eine Blind-/Bypassplatte, mit einer pneumatischen Bypassleitung, die die Anschlüsse 15a und 15b verbindet und mit drei pneumatischen Blindleitungen, die an die Anschlüsse 15c, 15d und 15e angeschlossen sind.

Die Schaltung S1 weist weiterhin eine Schnittstelle S1R zum Anschließen eines Verteilerblockes Rᵢ, eine Schnittstelle S1Y zum Anschließen eines Verteilerblockes Yⱼ, eine Schnittstelle S1Cv zum Anschließen eines Verteilerblockes Cvₖ und eine Schnittstelle S1X zum Anschließen eines Verteilerblockes Xₗ auf.

Die Schnittstellen S1R; S1Y; S1Cv bzw. S1X sind derart gestaltet, dass durch Anschließen oder Austauschen der Verteilerblöcke Rᵢ, Yⱼ, Cvₖ, Xₗ eine Konfiguration KL1.RᵢYⱼCvₖXₗ der fluidischen Leitungsmatrix L1 und damit eine Konfiguration KM1.RᵢYⱼCvₖXₗ des zumindest einen Moduls M1 ausbildbar ist.

Jede der Schnittstellen S1R; S1Y; S1Cv bzw. S1X ist dabei jeweils durch eine Anzahl von ortsfesten Anschlüssen der fluidischen Leitungsmatrix L1 ausgebildet.

Entsprechend sind Verteilerblöcke Ri, Yj, Cvk, Xl durch Anschließen an die zugeordneten Schnittstellen geeignet, eine Konfiguration KL1.RiYjCvkXl der fluidischen Leitungsmatrix der Schaltung auszubilden.

So ist die erste Schnittstelle S1R von den Anschlüssen S1Ra, S1Rb, S1Rc und S1Rd ausgebildet. Die zweite Schnittstelle S1Y ist von den Anschlüssen SlYa, SlYb, S1Yc und SlYd ausgebildet. Die dritte Schnittstelle S1Cv ist von den Anschlüssen S1Cva, S1Cvb, S1Cvc und S1Cvd ausgebildet. Und die vierte Schnittstelle S1X ist von den Anschlüssen S1Xa, S1Xb und S1Xc ausgebildet.

Die fluidische Leitungsmatrix L1 der Schaltung ist von einer Bremstafel, insbesondere in Form einer Rohrtafel oder einer Bohrtafel oder einer Klebetafel (auch bekannt als Frästafel), gebildet, sodass die Lage der Leitungsmatrix und dabei insbesondere die Lage ihrer Anschlüsse fest vorgegeben ist.

An der Frontseite der Bremstafel sind die Schnittstellen S1R; S1Y; S1Cv und S1X mit ihren Anschlüssen ausgebildet. Alternativ hierzu könnte aber auch vorgesehen sein, die Schnittstellen an einer anderen Seite - beispielsweise der Rückseite der Bremstafel auszubilden.

An der Frontseite der Bremstafel sind auch hier nicht bezeichneten Anschlüsse zum Anschließen der Bremskomponenten ausgebildet. Auch diese könnten alternativ an einer anderen Seite der Bremstafel ausgebildet sein.

An den Seiten der Bremstafel sind außerdem hier nicht weiter bezeichnete Anschlüsse zum Anschließen der Schaltung zugeordneter Verbindungsleitungen ausgebildet, die im Weiteren - zur Unterscheidung von den Anschlüssen der Schnittstellen und den Anschlüssen für die Bremskomponenten -auch als Leitungsanschlüsse bezeichnet sind.

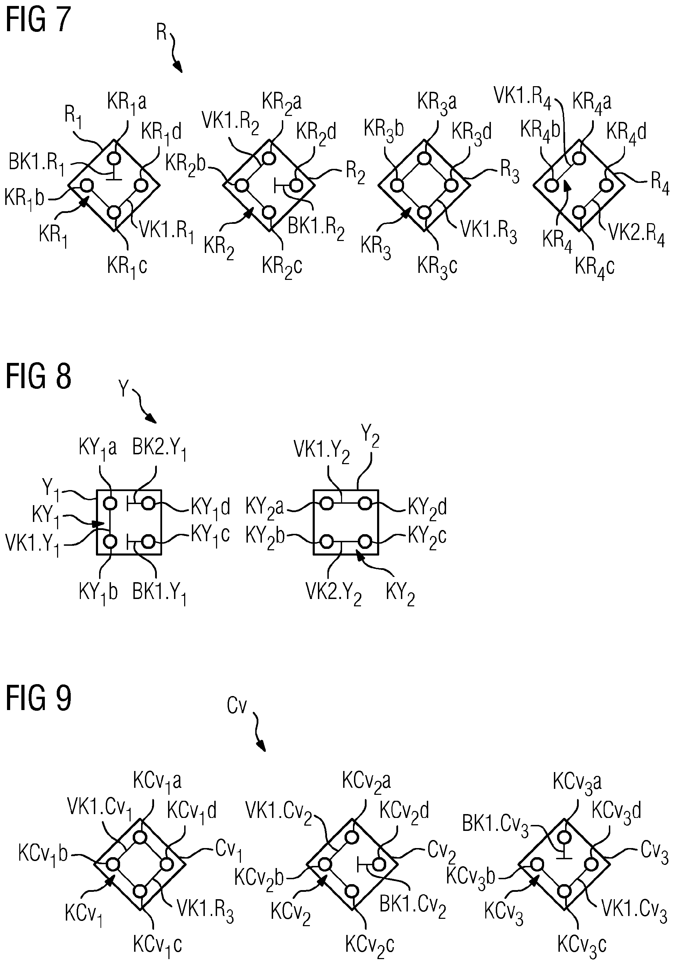

Die Figuren 7 bis 10 zeigen vier Verteilersätze R; Y; Cv; X zur Ausbildung verschiedener Modul-Konfigurationen.

Ein jeweiliger der Verteilersätze R; Y; Cv; X besteht aus zumindest zwei Verteilerblöcken, die geeignet ausgebildet sind, zwei unterschiedliche Konfigurationen der fluidischen Leitungsmatrix L1 und/oder einer weiteren fluidischen Leitungsmatrix L1 einer weiteren Schaltung S1 (vgl. Figur 4) auszubilden. Somit dienen die Verteilersätze nicht nur zum Konfigurieren der Leitungsmatrix einer Schaltung S1, sondern darüber hinaus auch zum Konfigurieren einer fluidischen Leitungsmatrix L, die aus mehreren miteinander verbundenen fluidischen Leitungsmatrizen L1, L1 mehrerer Schaltungen S1, S1 gebildet ist.

So besteht der Verteilersatz R aus Verteilerblöcken Rᵢ mit i=1 bis nR - also aus der Anzahl nR von Verteilerblöcken, wobei hier beispielhaft nR=4 ist. Der Verteilersatz R ist geeignet ausgebildet die unterschiedlichen Konfigurationen KL1.RᵢYⱼCvₖXₗ, ..., KL1.R_{nR}YⱼCvₖXₗ auszubilden.

Der Verteilersatz Y besteht aus den Verteilerblöcken Yⱼ mit j=1 bis nY (wobei hier beispielhaft nY=2 ist) und ist geeignet ausgebildet die unterschiedlichen Konfigurationen KL1.RᵢY₁CvₖXₗ, ..., KL1.RᵢY_{nY}CvₖXₗ auszubilden.

Der Verteilersatz Cv besteht aus den Verteilerblöcken Cvₖ mit k=1 bis nCv (wobei hier beispielhaft nCv=3 ist) und ist geeignet ausgebildet die unterschiedlichen Konfigurationen KL1.RᵢYⱼCv₁Xₗ, ..., KL1.RᵢYⱼCv_{nCv}Xₗ auszubilden.

Und der Verteilersatz X besteht aus den Verteilerblöcken Xₗ mit l=1 bis nX (wobei hier beispielhaft nX=2 ist) und ist geeignet ausgebildet die unterschiedlichen Konfigurationen KL1.RᵢYᵢCvₖX₁, ..., KL1.RᵢYⱼCvₖX_{nX} auszubilden.

Bei einem jeweiligen der Verteilersätze R; Y; Cv; X weist jeder der Verteilerblöcke eine in den Verteilerblock eingearbeitete Kanalmatrix mit einer Anzahl von Kanalanschlüssen auf, die den Anschlüssen der Schnittstellen zugeordnet sind.

So weist bei dem Verteilersatz R jeder der Verteilerblöcke Rᵢ mit i=1 bis nR eine in den Verteilerblock eingearbeitete Kanalmatrix KRᵢ mit den Kanalanschlüssen KRᵢa, KRᵢb, KRᵢc und KRᵢd auf, wobei die Kanalanschlüsse KRᵢa, KRᵢb, KRᵢc und KRᵢd und die Anschlüsse S1Ra, S1Rb, S1Rc und S1Rd einander paarweise zugeordnet sind.

Bei dem Verteilersatz Y weist jeder der Verteilerblöcke Yⱼ mit j=1 bis nY eine in den Verteilerblock eingearbeitete Kanalmatrix KYⱼ mit den Kanalanschlüssen KYⱼa, KYⱼb, KYⱼc und KYⱼd auf, wobei die Kanalanschlüsse KYⱼa, KYⱼb, KYⱼc und KYⱼd und die Anschlüsse SlYa, SlYb, S1Yc und SlYd einander paarweise zugeordnet sind.

Bei dem Verteilersatz Cv weist jeder der Verteilerblöcke Cvₖ mit k=1 bis nCv eine in den Verteilerblock eingearbeitete Kanalmatrix KCvₖ mit den Kanalanschlüssen KCv_{K}a, KCvₖb, KCvₖc und KCvₖd auf, wobei die Kanalanschlüsse KCv_{K}a, KCvₖb, KCvₖc und KCvₖd und die Anschlüsse S1Cva, S1Cvb, S1Cvc und S1Cvd einander paarweise zugeordnet sind.

Und bei dem Verteilersatz X weist jeder der Verteilerblöcke Xₗ mit l=1 bis nX eine in den Verteilerblock eingearbeitete Kanalmatrix KXₗ mit den Kanalanschlüssen KXₗa, KXₗb und KXₗc auf, wobei die Kanalanschlüsse KXₗa, KXₗb und KXₗc und die Anschlüsse S1Xa, S1Xb und S1Xc einander paarweise zugeordnet sind.

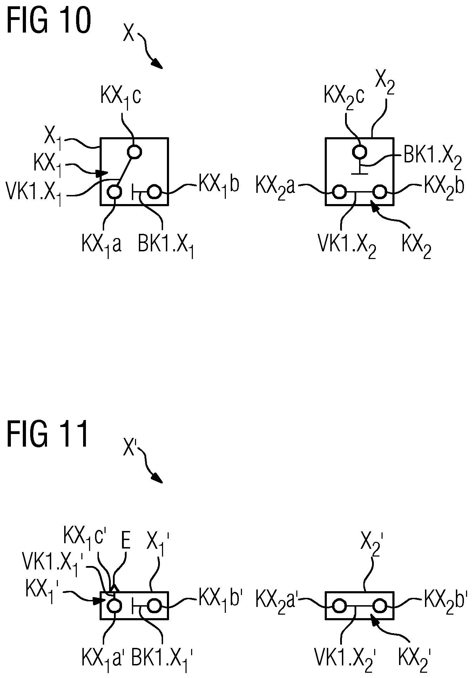

Alternativ hierzu kann und bei der Leitungsmatrix L1 auf den Anschluss S1Xc und dem mit der Entlüftung E versehenen Leitungsabschnitt L1.24 verzichtet werden, wenn anstelle des Verteilersatzes X der Verteilersatz X' zum Konfigurieren verwendet wird. Bei diesem Verteilersatz weist nur der Verteilerblock X₁ einen dritten Kanalanschluss KXₗc' auf, wobei der Kanalanschluss KX₁c' mit einer Entlüftung E ins Freie versehen ist, so wie dies beispielsweise in der Figur 11 dargestellt ist.

Bei jedem der Verteilerblöcke Rᵢ mit i=1 bis nR; Yⱼ mit j=1 bis nY; Cvₖ mit k=1 bis nCv; Xₗ mit l=1 bis nX eines jeweiligen der Verteilersätze R; Y; Cv; X sind zumindest zwei der Kanalanschlüsse über einen Verbindungskanal VK1.Rᵢ; VK1.Yⱼ; VK1.Cvₖ; VK1.xₗ der Kanalmatrix verbunden und bei zumindest einem der Verteilerblöcke Rᵢ mit i=1 bis nR; Yⱼ mit j=1 bis nY; Cvₖ mit k=1 bis nCv; Xₗ mit l=1 bis nX eines jeweiligen der Verteilersätze R; Y; Cv; X sind zwei weitere der Kanalanschlüsse über einen weiteren Verbindungskanal der Kanalmatrix verbunden oder es ist zumindest ein weiterer der Kanalanschlüsse blind ausgebildet, insbesondere mit einem Blindkanal der Kanalmatrix verbunden.

Jeder Rᵢ; Yⱼ; Cvₖ; Xₗ der Verteilerblöcke ist jeweils als ein passives Bauteil ausgebildet.

Jeder Rᵢ; Yⱼ; Cvₖ; Xₗ der Verteilerblöcke ist außerdem einstückig, insbesondere durch ein 3D-Druckverfahren, hergestellt.

Zur Bildung einer jeweiligen Modul-Konfiguration KM1.RᵢYⱼCvₖXₗ des Moduls M1 werden also zunächst die Verteilerblöcke Rᵢ, Yⱼ, Cvₖ und Xₗ aus den Verteilersätzen R, Y, Cv und X ausgewählt. Diese werden dann an die zugeordneten Schnittstellen angeschlossen und dadurch die Konfiguration KL1.RᵢYⱼCvₖXₗ der fluidischen Leitungsmatrix ausgebildet.

Die Figur 3 zeigt eine erste Konfiguration 107 der Bremsgerätetafel 7, die aus vier Bremssteueranordnungen in Form von elektropneumatischen Modulen M1, M2, M3, M4 gebildet.

Jede der Bremssteueranordnungen (jedes der Module M1; M2; M3 bzw. M4) weist eine Schaltung S1; S2; S3 bzw. S4 mit einer fluidischen (hier pneumatischen) Leitungsmatrix L1; L2; L3 bzw. L4 und mit an die fluidische Leitungsmatrix angeschlossenen Bremskomponenten 11 bis 15; 21 und 22; 31 und 32; 41 auf. Außerdem weist das Modul M1 ein erstes Set Verteilerblöcke R₃, Y₁, Cv₁ und X₁ auf, mittels dessen die fluidische Leitungsmatrix L1 konfiguriert ist - also eine erste Konfiguration KL1.R₃Y₁Cv₁X₁ der fluidischen Leitungsmatrix L1 und damit auch eine erste Modul-Konfiguration KM1.R₃Y₁Cv₁X₁ des Moduls M1 gebildet sind.

Die erste Konfiguration 107 der Bremsgerätetafel ist mittels der ersten pneumatischen Verbindungsleitung VL1, die an einen Leitungsanschluss des zweiten Moduls M2 angeschlossen ist, mit der Hauptluftleitung HLL verbunden. Außerdem ist die erste Konfiguration 107 der Bremsgerätetafel mittels einer dritten pneumatischen Verbindungsleitung VL3, die einen Leitungsanschluss des zweiten Moduls M2 mit der Verbindungsleitung VL2 verbindet, an die Hauptbehälterluftleitung HBL angeschlossen. Im Zuge der Verbindungsleitung VL2 ist ein Rückschlagventil 8 angeordnet. An die Verbindungsleitung VL2 ist - dem Rückschlagventil 8 nachgeordnet - ein Bremsluftbehälter 9 angeschlossen.

Außerdem ist mittels einer vierten pneumatischen Verbindungsleitung VL4, die an einen Leitungsanschluss des ersten Moduls M1 angeschlossen ist, ein erster Bremszylinder B1 des Drehgestells und mittels einer fünften pneumatischen Verbindungsleitung VL5, die an einen Leitungsanschluss des dritten Moduls M3 angeschlossen ist, ein zweiter Bremszylinder B2 des Drehgestells an die Bremsgerätetafel angeschlossen.

Weiterhin sind die Leitungsmatrizen L1 bis L4 der Module mittels pneumatischer Verbindungsleitungen V6 bis V11 in der in Figur 3 gezeigten Weise verbunden. Leitungsanschlüsse der Leitungsmatrizen L1 bis L4, die nicht an eine Verbindungsleitung angeschlossen sind, sind mit Verschlüssen versehen.

Die Schaltung S2 des zweiten Moduls M2 weist die Bremskomponenten 21 und 22 auf. Die Bremskomponente 21 ist eine indirekte wirkende Steuerung in Form eines Steuerventils, das Vorsteuerdruckluft bereitstellt, die auch als Versorgungsluft dient. Die Bremskomponente 22 ist eine Absperreinrichtung für das Steuerventil 21.

Die Schaltung S3 des dritten Moduls M3 weist die Bremskomponenten 31 und 32 auf. Die Bremskomponente 31 ist eine zusätzliche direkt wirkende Steuerung. Die Bremskomponente 32 ist ein Relaisventil.

Die Schaltung S4 des vierten Moduls M4 weist die Bremskomponente 41 auf. Die Bremskomponente 41 ist eine direkt wirkende Notbremssteuerung.

Die erste Schnittstelle S1R der Leitungsmatrix L1 und ein jeweiliger an die erste Schnittstelle angeschlossener erster Verteilerblock Rᵢ sind als einander zugeordnete Mittel zur Bereitstellung einer Konfiguration von Strömungspfaden für die von dem Bremsluftbehälter 9 als Versorgungsluft bereitgestellte Druckluft ausgebildet.

Die zweite Schnittstelle S1Y und ein an die zweite Schnittstelle angeschlossener zweiter Verteilerblock Yⱼ sind als einander zugeordnete Mittel zur Bereitstellung einer Konfiguration von Strömungspfaden für die von dem Steuerventil 22 bereitgestellte Vorsteuerdruckluft ausgebildet.

Die dritte Schnittstelle S1Cv und ein an die dritte Schnittstelle angeschlossener dritter Verteilerblock Cvₖ sind als einander zugeordnete Mittel zur Bereitstellung einer Konfiguration von Strömungspfaden für Druckluft, die als Versorgungsluft für angeschlossene Steuerungen und/oder Bremsdruckregler 11, 12, 31, 41 bereitgestellt ist, ausgebildet.

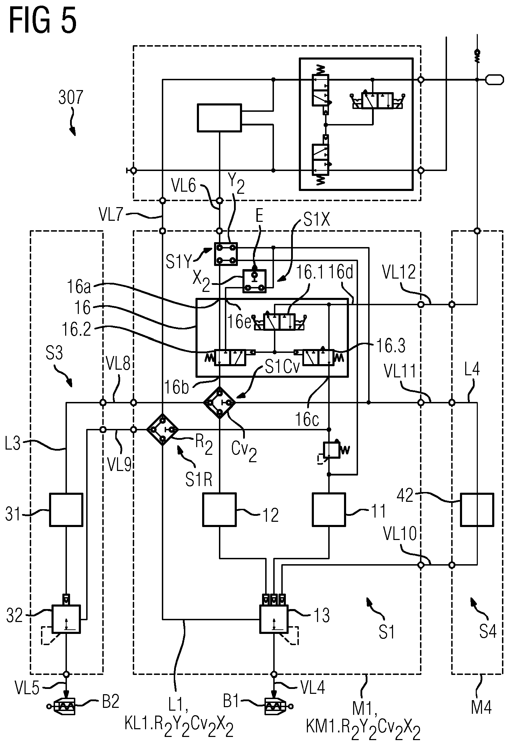

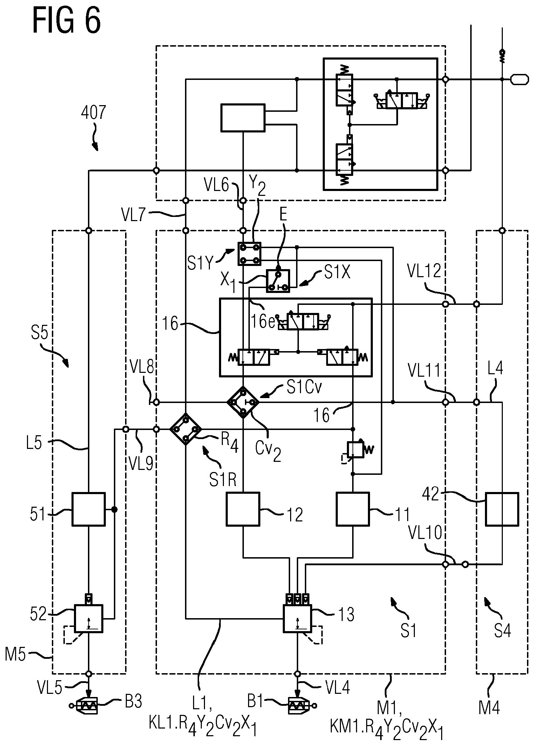

Die vierte Schnittstelle S1X und ein an die vierte Schnittstelle angeschlossener vierter Verteilerblock Xₗ sind als einander zugeordnete Mittel zur Bereitstellung einer Konfiguration von zumindest einem weiteren Strömungspfad für Druckluft, die als Versorgungsluft für angeschlossene Steuerungen und/oder Bremsdruckregler 11, 12, 31, 41 bereitgestellt ist, ausgebildet. Sie dienen beim Einsatz einer in den Figuren 5 und 6 gezeigten Absperreinrichtung 16 dazu, angeschlossene Steuerungen und/oder Bremsdruckregler bei Absperrung entweder ins Freie zu entlüften oder mit anderen Strömungspfaden zu verbinden.

Gemäß Figur 4 können auch zwei Basismodule M1* verbunden und durch Sets von Verteilerblöcken konfiguriert werden.

Weiterhin kann gemäß Figur 5 die in der Figur 3 Ausführungsform 207 modifiziert werden, indem anstelle der direkt wirkenden Notbremssteuerung die als Bypassplatte ausgebildete Bremskomponente an die Leitungsmatrix L4 angeschlossen wird und indem anstelle der Blind-/Bypassplatte 15 die mit 16 bezeichnete Bremskomponente an die Leitungsmatrix L1 angeschlossen wird, wobei die Bremskomponente 16 eine Absperreinrichtung ist. Die dann für die Bildung der Ausführungsform 307 noch notwendige Konfiguration der Leitungsmatrix L1 erfolgt mit dem gezeigten Set von Konfiguratoren R₂, Y₂, Cv₂, X₂.

Außerdem kann gemäß Figur 6 die in der Figur 5 gezeigte Ausführungsform 307 modifiziert werden, indem anstelle des Moduls M3 das Modul M5 mit dem Modul M1 verbunden wird, wobei das Modul M5 die Bremskomponenten 51 und 52 aufweist. Die Bremskomponente 51 ist eine zusätzliche indirekt wirkende Steuerung und die Bremskomponente 52 ist ein Relaisventil. Die dann für die Bildung der Ausführungsform 407 noch notwendige Konfiguration der Leitungsmatrix L1 erfolgt mit dem gezeigten Set von Konfiguratoren R4, Y₂, Cv₂, X₁.

Diese Absperreinrichtung 16 weist ein sowohl elektrisch als auch mechanisch (manuell) betätigbares 3/2-Wegeventil 16.1, zwei pneumatisch betätigbare 3/2-Wegeventile 16.2 und 16.3 sowie hier nicht näher bezeichnete Verbindungsleitungen auf. Mittels der Verbindungsleitungen sind in der in den Figuren 5 und 6 gezeigten Weise ein Eingang des 3/2-Wegeventil 16.1 und Ein- und Ausgänge der 3/2-Wegeventile 16.2 und 16.3 mit Anschlüssen 16a bis 16e verbunden. Über diese Anschlüsse 16a bis 16e ist die Absperreinrichtung 16 an die Leitungsmatrix L1 angeschlossen. Außerdem sind ein Ausgang des 3/2-Wegeventil 16.1 und ein Ausgang des 3/2-Wegeventils 16.3 mit einer Entlüftung ins Freie versehen. Ferner sind die Steuereingänge der 3/2-Wegeventile 16.2 und 16.3 an einen Ausgang des 3/2-Wegeventils 16.1 angeschlossen.

Die Verteilerblöcke (Konfiguratoren) Rᵢ; Yⱼ; Cvₖ; Xₗ der Verteilersätze R; Y; Cv; X, dienen also zum Ausbilden elektropneumatischer Bremssteueranordnungen, insbesondere in Form von Modul-Konfigurationen, die zur Steuerung von Druckluftbremsen für Schienenfahrzeuge vorgesehen sind. Das Konfigurieren dient folgenden Zwecken:
- der Änderung von Funktionen durch die Änderung der Verschaltung von Modulen und Bremskomponenten,
- der Änderung des Funktionsumfangs, insbesondere des Deaktivierens von Funktionen durch pneumatische Isolation von Modulen und Komponenten sowie
- des Aktivierens von Funktionen durch pneumatische Verbindung von Modulen und Komponenten.

Die Konfiguratoren kommen bei Bremsgerätetafeln oder elektropneumatischen Bremsmodulen zum Einsatz, die für die wagenweise oder drehgestellweise Steuerung von Druckluftbremsen geeignet sind. Die Konfigurationen unterstützen die Verschaltung von Modulen wie beispielsweise in der Figur 2 für eine drehgestellweise, direkt wirkende Bremse dargestellt ist. In dem in der Figur 2 gezeigten Beispiel können die beiden als direkte Bremse wirkenden Module miteinander verschaltet werden. Es werden hierzu lediglich entsprechende Konfiguratoren R₃, Y₁, Cv₁, X₁ und R₁, Y₁, Cv₃,X₁ angeschlossen.

Der Verteilersatz R dient der Konfiguration der Zuführung, Verteilung und Isolation der Versorgungsluft aus dem Bremsluftbehälter. Seine Verteilerblöcke (Konfiguratoren) besitzen 4 Kanalanschlüsse (Ports). Mit diesen Konfiguratoren kann bestimmt werden, über welche Absperreinrichtung 22 oder 16 die Druckluftversorgung der Relaisventile 13, 32, 52, 14 oder der direkt wirkenden Bremsdruckregler 11, 12 abgesperrt werden kann.

In den Figuren 3 bis 6 ist die Funktion der pneumatischen Konfiguratoren an dem als direkte Bremse wirkenden Modul M1 beschrieben. Die folgenden Konfigurationsmöglichkeiten sind beispielshaft gezeigt:
Bei der in der Figur 3 gezeigten Konfiguration erfolgt die Druckluftversorgung aller Relaisventile 13 und 32 sowie des direkt wirkenden Bremsdruckreglers 11 über die Absperrvorrichtung 22, die dem Steuerventil 21 zugeordnet ist.

Bei der in der Figur 5 gezeigten Konfiguration erfolgt die Druckluftversorgung aller Relaisventile 13, 32 über die Absperrvorrichtung 22.

Bei der in der Figur 6 gezeigten Konfiguration erfolgt die Druckluftversorgung der optionalen, zusätzlichen indirekten Bremse [also der indirekten Steuerung 51 und des Relaisventils 52) über die Absperreinrichtung 22. Die Absperrung des Relaisventil 13 erfolgt über die Absperreinrichtung 16, die den direkt wirkenden Bremsdruckreglern 11, 12 zugeordnet ist.

Der Verteilersatz R bzw. der Einsatz seiner Konfiguratoren bietet den Vorteil, dass sich beispielshaft die folgenden verschiedenen Konzepte bezüglich der Absperrung realisieren lassen:
- Absperrung der gesamten pneumatischen Bremse eines Wagens mit der Absperreinrichtung 22 des Steuerventils 21 (vgl. Figur 3),
- Absperrung der gesamten pneumatischen Bremse eines Drehgestells mit der Absperreinrichtung 22 des Steuerventils 21 (vgl. Figur 4),
- Absperrung der indirekt wirkenden Bremse (selektiv) mit der Absperreinrichtung 22 des Steuerventils 21 (vgl. Figur 6),
- Absperrung der direkt wirkenden Bremse (selektiv) mit der Absperreinrichtung 16 der direkt wirkenden Bremsdruckregler (vgl. Figur 6),
- Einschaltung des Schleppmodus für die direkt wirkende Bremse mit der Absperreinrichtung 16 der direkt wirkenden Bremsdruckregler (Vgl. Figur 5)

Der Verteilersatz Cv dient der Konfiguration der Zuführung und Verteilung der Versorgungsluft für die angeschlossenen pneumatischen Steuer- oder Regelkreise. Seine Konfiguratoren besitzen 4 Kanalanschlüsse (Ports). Mit diesen Konfiguratoren kann bestimmt werden, wie die direkt wirkenden Bremsdruckregler 11, 12 sowie die optionalen Steuerkreise 31, 41 mit Druckluft versorgt werden. Die folgenden Konfigurationsmöglichkeiten bestehen:
Bei den in den Figuren 3 und 4 gezeigten Konfigurationen erfolgt die Versorgung der optionalen, zusätzlichen direkt wirkende Steuerung 31, der direkt wirkenden Bremsdruckregler 11, 12 und der direkt wirkender Notbremssteuerung 41 über den Konfigurator Y ("Konfigurator Vorsteuerdruck Steuerventil").

Bei der in der Figur 5 gezeigten Konfiguration erfolgt die Versorgung der optionalen, zusätzlichen direkt wirkende Steuerung 31 und des direkt wirkenden Bremsdruckreglers 12 über den Konfigurator Y ("Konfigurator Vorsteuerdruck Steuerventil").

Der Verteilersatz Cv bzw. der Einsatz seiner Konfiguratoren bietet den Vorteil, dass sich beispielshaft die folgenden verschiedenartigen Bremssystem-Architekturen realisieren lassen:
Zum Einen eine Reihenschaltung von Steuerventil 21 und direkt wirkenden Bremsen (vgl. Figuren 3 und 4):
Versorgung des direkt wirkenden Bremsdruckregler 12 sowie der optionalen Steuerkreise 31, 41 über den Vorsteuerdruck eines vereinfachten federbelasteten Steuerventils 21. Es entsteht eine Reihenschaltung vom Steuerventil 21 und den direkt wirkenden Bremsen. Die direkt wirkenden Bremsen stellen im Regelbetrieb das Hauptbremssystem dar. Die HLL wird nur im Schleppfall gefüllt, wodurch die direkt wirkenden Bremsen automatisch gelöst werden. Geschleppt wird ausschließlich über die indirekt wirkende Bremse.

Zum Anderen eine Parallelschaltung von Steuerventil 21 und direkt wirkenden Bremsen (siehe Abbildung 5 und 6):
Das Steuerventil 21 sowie die direkt wirkenden Bremsen werden auf das Relaisventil geschaltet. Die direkt wirkenden Bremsen stellen das Hauptbremssystem dar. Die indirekt wirkende Bremse wird für Schnellbremsungen oder zum Schleppen bzw. zum Bergen eines defekten Zuges genutzt.

Der Verteilersatz Y dient der Konfiguration der Zuführung und Verteilung des Vorsteuerdrucks des Steuerventils 21. Seine Verteilerblöcke besitzen 4 Kanalanschlüsse (Ports). Seine Konfiguratoren wirken bei ihrem Einsatz mit dem jeweils eingesetzten Konfigurator des Verteilersatzes Cv zusammen, um die oben bereits genannten Bremssystem-Architekturen zu realisieren.

Bei den in Figur 3 gezeigten Konfigurationen erfolgt die Versorgung der optionalen, zusätzlichen direkt wirkende Steuerung 31, der direkt wirkenden Bremsdruckregler 11, 12 und der direkt wirkender Notbremssteuerung 41 über den Vorsteuerdruck des Steuerventils 21. Es entsteht eine Reihenschaltung aus dem Steuerventil 21 und den über den jeweiligen Konfigurator Yⱼ angeschlossenen direkt wirkenden Steuer- und Regelkreisen 31, 11, 12, 41].

Bei den in den Figuren 5 und 6 gezeigten Konfigurationen erfolgt die Versorgung der optionalen, zusätzlichen direkt wirkende Steuerung 31 und des direkt wirkenden Bremsdruckreglers 12 über das Druckminderventil 14 für die Luftversorgung der Bremsdruckregler.

Der Verteilersatz X dient der Konfiguration bei Absperrung mittels der Absperreinrichtung 16 der direkt wirkenden Bremsdruckregler. Die Konfiguratoren dieses Verteilersatzes X besitzen drei Kanalanschlüsse (Ports).

Bei der in Figur 6 gezeigten Konfiguration wird bei Betätigung der Absperreinrichtung 16 ("Absperreinrichtung der direkt wirkenden Bremsdruckregler") der angeschlossene Regelkreis 31 entlüftet.

Bei der in Figur 5 gezeigten Konfiguration werden bei Betätigung der Absperreinrichtung 16 ("Absperreinrichtung der direkt wirkenden Bremsdruckregler") die angeschlossenen Steuer- und Regelkreise 12, 31 mit dem Vorsteuerdruck des Steuerventils 21 verbunden. Es entsteht eine Reihenschaltung aus dem Steuerventil 21 und den über den Konfigurator X angeschlossenen direkt wirkenden Steuer- und Regelkreise 12, 31.

Die Erfindung ermöglicht durch den Einsatz der pneumatischen Konfiguratoren die einfache und kostengünstige Anpassung von Bremsgerätetafel und elektropneumatischen Bremsmodulen. Die pneumatischen Konfiguratoren können sowohl die Funktion elektropneumatischer Bremsmodule verändern als auch deren Zusammenwirken zu anderen Modulen bestimmen. Mit den pneumatischen Konfiguratoren lässt sich auch das prinzipielle Bremskonzept verändern. Ein weiterer Vorteil der pneumatischen Konfiguratoren besteht in der Möglichkeit der Bereitstellung standardisierter Bremsgerätetafeln und elektropneumatischer Module, die sich in Bezug auf die erwünschte pneumatische Schaltung ohne wesentliche Konstruktionsänderung anpassen lassen. Standardisierte Bremsgerätetafeln und elektropneumatische Bremsmodule können mittels der pneumatischen Konfiguratoren in ihrer Funktion verändert werden ohne dabei zwangsläufig die Gültigkeit von Typprüfungen in Frage zu stellen; die Typrüfung kann bereits die einzelnen Konfigurationen berücksichtigen.

## Patentansprüche

1. Bremssteueranordnung, insbesondere für Schienenfahrzeuge,
- bei welcher eine Schaltung (S1) eine fluidische Leitungsmatrix (L1), an die fluidische Leitungsmatrix (L1) angeschlossene Bremskomponenten (11, 12, 13, 14, 15; 11, 12, 13, 14, 16) und zumindest eine Schnittstelle (S1R; S1Y; S1Cv; S1X) zum Anschließen eines Verteilerblockes (Rᵢ; Yⱼ; Cvₖ; Xₗ), welche derart gestaltet ist, dass durch Anschließen oder Austauschen des Verteilerblockes (Rᵢ; Yⱼ; Cvₖ; Xₗ) eine Konfiguration (KL1.RᵢYⱼCvₖXₗ) der fluidischen Leitungsmatrix ausbildbar ist, aufweist,
• wobei die zumindest eine Schnittstelle (S1R; S1Y; S1Cv; S1X) durch Anschlüsse (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) der fluidischen Leitungsmatrix ausgebildet ist,
• wobei die fluidische Leitungsmatrix (L1) von einer Bremstafel, insbesondere in Form einer Rohrtafel oder einer Bohrtafel oder einer Klebetafel, gebildet ist, wobei an einer der Seiten, insbesondere an der Frontseite oder an der Rückseite, der Bremstafel die zumindest eine Schnittstelle (S1R; S1Y; S1Cv; S1X) mit ihren Anschlüssen (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) ausgebildet ist, und
• wobei die fluidische Leitungsmatrix (L1) zusätzlich zu den Anschlüssen (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc), durch welche die zumindest eine Schnittstelle gebildet ist, auch Anschlüsse zum Anschließen der Bremskomponenten (11, 12, 13, 14, 15; 11, 12, 13, 14, 16) aufweist, wobei die Anschlüsse zum Anschließen der Bremskomponenten jeweils an einer der Seiten, insbesondere an der Frontseite, der Bremstafel, ausgebildet sind,
- bei welcher zumindest der eine Verteilerblock (Rᵢ; Yⱼ; Cvₖ; Xₗ) bereitgestellt ist, welcher durch Anschließen an die zumindest eine Schnittstelle (S1R; S1Y; S1Cv; S1X) der Schaltung (S1) zum Ausbilden der einen Konfiguration (KL1.RᵢYⱼCvₖXₗ) der fluidischen Leitungsmatrix (L1) der Schaltung (S1) geeignet ausgebildet ist, und
- bei welcher der zumindest eine Verteilerblock (Rᵢ; Yⱼ; Cvₖ; Xₗ) an die zumindest eine Schnittstelle (S1R; S1Y; S1Cv; S1X) der Schaltung (S1) angeschlossen ist, wodurch die eine Konfiguration (KL1.RᵢYⱼCvₖXₗ) der fluidischen Leitungsmatrix (L1) der Schaltung (S1) durch den Verteilerblock (Rᵢ; Yⱼ; Cvₖ; Xₗ) ausgebildet ist,
**dadurch gekennzeichnet,**
- **dass** der zumindest eine Verteilerblock (Rᵢ; Yⱼ; Cvₖ; Xₗ) ein vor dem Anschließen an die zumindest eine Schnittstelle (S1R; S1Y; S1Cv; S1X) aus einem Verteilersatz (R; Y; Cv; X) ausgewählter Verteilerblock ist,
- wobei der Verteilersatz (R; Y; Cv; X) zusätzlich zu dem zumindest einen Verteilerblock (Rᵢ; Yⱼ; Cvₖ; Xₗ) zumindest einen weiteren Verteilerblock aufweist, welcher durch Anschließen an die zumindest eine Schnittstelle (S1R; S1Y; S1Cv; S1X) der Schaltung (S1) zum Ausbilden einer von der einen Konfiguration (KL1.RᵢYⱼCvₖXₗ) verschiedenen, weiteren Konfiguration der fluidischen Leitungsmatrix (L1) der Schaltung (S1) geeignet ausgebildet ist.

2. Bremssteueranordnung nach Anspruch 1,
**dadurch gekennzeichnet, dass**
die fluidische Leitungsmatrix (L1) zusätzlich zu den Anschlüssen (S1Ra, S1Rb, S1Rc, S1Rd; SlYa, SlYb, SlYc, SlYd; S1Cva, S1Cvb, S1Cvc, S1Cvd; S1Xa, S1Xb, S1Xc), durch welche die zumindest eine Schnittstelle gebildet ist, auch Anschlüsse zum Anschließen der Schaltung zugeordneter Verbindungsleitungen (VL4, VL6, VL7, VL8, VL9, VL10, VL11, VL12) aufweist, wobei die Anschlüsse zum Anschließen der Schaltung zugeordneter Verbindungsleitungen jeweils an einer der Seiten der Bremstafel ausgebildet sind.

3. Bremssteueranordnung nach Anspruch 1,
**dadurch gekennzeichnet, dass**
der Verteilerblock (Rᵢ; Yⱼ; Cvₖ; Xₗ) als ein passives Bauteil ausgebildet ist.

4. Bremssteueranordnung nach Anspruch 1 oder 3,
**dadurch gekennzeichnet, dass**
der Verteilerblock (Rᵢ; Yⱼ; Cvₖ; Xₗ) einstückig, insbesondere durch ein 3D-Druckverfahren, hergestellt ist.

5. Bremssteueranordnung nach Anspruch 1,
**dadurch gekennzeichnet, dass**
jeder der Verteilerblöcke (Rᵢ mit i=1 bis nR; Yⱼ mit j=1 bis nY; Cvₖ mit k=1 bis nCv; Xₗ mit l=1 bis nX) des Verteilersatzes (R; Y; Cv; X) eine in den Verteilerblock eingearbeitete Kanalmatrix (KRᵢ; KYⱼ; KCvₖ; KXₗ) mit Kanalanschlüssen (KRᵢa, KRᵢb, KRᵢc, KRᵢd; KYⱼa, KYⱼb, KYⱼc, KYⱼd; KCvₖa, KCvₖb, KCvₖc, KCvₖd; KXₗa, KXₗb, KXₗc) zum Anschließen an zugeordnete Anschlüsse (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) der fluidischen Leitungsmatrix (L1) der Schaltung aufweist.

6. Bremssteueranordnung nach Anspruch 5,
**dadurch gekennzeichnet, dass**
bei jedem der Verteilerblöcke (Rᵢ mit i=1 bis nR; Yⱼ mit j=1 bis nY; Cvₖ mit k=1 bis nCv; Xₗ mit l=1 bis nX) des Verteilersatzes (R; Y; Cv; X) zumindest zwei der Kanalanschlüsse über einen Verbindungskanal (VK1.Rᵢ; VK1.Yⱼ; VK1.Cvₖ; VK1.Xₗ) der Kanalmatrix verbunden sind und bei zumindest einem der Verteilerblöcke zwei weitere der Kanalanschlüsse über einen weiteren Verbindungskanal (VK2.R₄, VK2.Y₂) der Kanalmatrix verbunden sind oder zumindest ein weiterer der Kanalanschlüsse blind ausgebildet, insbesondere mit einem Blindkanal (BK1.R₁, BK1.R₂; BK1.Y₁, BK2.Y₁; BK1.Cv₂, BK1.Cv₃) der Kanalmatrix verbunden, ist.

7. Bremssteueranordnung nach Anspruch 1,
**dadurch gekennzeichnet, dass**
eine erste Schnittstelle (S1R) und ein an die erste Schnittstelle angeschlossener erster Verteilerblock (Rᵢ) als einander zugeordnete Mittel zur Bereitstellung einer Konfiguration von Strömungspfaden für die von einem Bremsluftbehälter (9) als Versorgungsluft bereitgestellte Druckluft ausgebildet sind.

8. Bremssteueranordnung nach Anspruch 1 oder 7,
**dadurch gekennzeichnet, dass**
eine zweite Schnittstelle (S1Y) und ein an die zweite Schnittstelle angeschlossener zweiter Verteilerblock (Yⱼ) als einander zugeordnete Mittel zur Bereitstellung einer Konfiguration von Strömungspfaden für die von einem Steuerventil (22) bereitgestellte Vorsteuerdruckluft ausgebildet sind.

9. Bremssteueranordnung nach Anspruch 1 oder einem der Ansprüche 7 bis 8,
**dadurch gekennzeichnet, dass**
eine dritte Schnittstelle (S1Cv) und ein an die dritte Schnittstelle angeschlossener dritter Verteilerblock (Cvₖ) als einander zugeordnete Mittel zur Bereitstellung einer Konfiguration von Strömungspfaden für Druckluft, die als Versorgungsluft für angeschlossene Steuerungen und/oder Bremsdruckregler (11, 12, 31, 41, 51) bereitgestellt ist, ausgebildet sind.

10. Bremssteueranordnung nach Anspruch 1 oder einem der Ansprüche 7 bis 9,
**dadurch gekennzeichnet, dass**
eine vierte Schnittstelle (S1X) und ein an die vierte Schnittstelle angeschlossener vierter Verteilerblock (Xₗ) als einander zugeordnete Mittel zur Bereitstellung einer Konfiguration von zumindest einem weiteren Strömungspfad für Druckluft, die als Versorgungsluft für angeschlossene Steuerungen und/oder Bremsdruckregler (11, 12, 31, 41, 51) bereitgestellt ist, ausgebildet sind.

11. Schienenfahrzeug (1),
**gekennzeichnet, durch**
eine Bremssteueranordnung nach einem der Ansprüche 1 bis 10.

12. Schienenfahrzeug (1) nach Anspruch 11,
**dadurch gekennzeichnet, dass**
die Bremssteueranordnung als Teil einer Bremsgerätetafel, insbesondere als Modul (M1) einer Bremsgerätetafel ausgebildet ist.

13. Verfahren zur Bildung einer Bremssteueranordnung, insbesondere für Schienenfahrzeuge (1),
- bei welchem eine Schaltung (S1) bereitgestellt wird, welche eine fluidische Leitungsmatrix (L1), an die fluidische Leitungsmatrix (L1) angeschlossene Bremskomponenten (11, 12, 13, 14, 15; 11, 12, 13, 14, 16) und zumindest eine Schnittstelle (S1R; S1Y; S1Cv; S1X) zum Anschließen eines Verteilerblockes (Rᵢ; Yⱼ; Cvₖ; Xₗ), welche derart gestaltet ist, dass durch Anschließen oder Austauschen des Verteilerblockes (S1R; S1Y; S1Cv; S1X) eine Konfiguration (KL1.RᵢYⱼCvₖXₗ) der fluidischen Leitungsmatrix ausbildbar ist, aufweist,
• wobei die zumindest eine Schnittstelle (S1R; S1Y; S1Cv; S1X) durch Anschlüsse (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) der fluidischen Leitungsmatrix ausgebildet ist,
• wobei welcher die fluidische Leitungsmatrix (L1) von einer Bremstafel, insbesondere in Form einer Rohrtafel oder einer Bohrtafel oder einer Klebetafel, gebildet ist, wobei an einer der Seiten, insbesondere an der Frontseite oder an der Rückseite, der Bremstafel die zumindest eine Schnittstelle (S1R; S1Y; S1Cv; S1X) mit ihren Anschlüssen (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) ausgebildet ist, und
• wobei die fluidische Leitungsmatrix (L1) zusätzlich zu den Anschlüssen (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc), durch welche die zumindest eine Schnittstelle gebildet ist, auch Anschlüsse zum Anschließen der Bremskomponenten (11, 12, 13, 14, 15; 11, 12, 13, 14, 16) aufweist, wobei die Anschlüsse zum Anschließen der Bremskomponenten jeweils an einer der Seiten, insbesondere an der Frontseite, der Bremstafel, ausgebildet sind,
- bei welchem zumindest der eine Verteilerblock (Rᵢ; Yⱼ; Cvₖ; Xₗ) bereitgestellt wird, welcher durch Anschließen an die zumindest eine Schnittstelle (S1R; S1Y; S1Cv; S1X) der Schaltung (S1) zum Ausbilden der einen Konfiguration (KL1.RᵢYⱼCvₖXₗ) der fluidischen Leitungsmatrix (L1) der Schaltung (S1) geeignet ausgebildet ist, und
- bei welchem der zumindest eine Verteilerblock (Rᵢ; Yⱼ; Cvₖ; Xₗ) an die zumindest eine Schnittstelle (S1R; S1Y; S1Cv; S1X) der Schaltung (S1) angeschlossen und dadurch die eine Konfiguration (KL1.RᵢYⱼCvₖXₗ) der fluidischen Leitungsmatrix der Schaltung (S1) durch den Verteilerblock (Rᵢ; Yⱼ; Cvₖ; Xₗ) ausgebildet wird
**dadurch gekennzeichnet,**
- **dass** der zumindest eine Verteilerblock (Rᵢ; Yⱼ; Cvₖ; Xₗ) vor dem Anschließen an die zumindest eine Schnittstelle (S1R; S1Y; S1Cv; S1X) aus einem Verteilersatz (R; Y; Cv; X) ausgewählt wird,
- wobei der Verteilersatz (R; Y; Cv; X) zusätzlich zu dem zumindest einen Verteilerblock (Rᵢ; Yⱼ; Cvₖ; Xₗ) zumindest einen weiteren Verteilerblock aufweist, welcher durch Anschließen an die zumindest eine Schnittstelle (S1R; S1Y; S1Cv; S1X) der Schaltung (S1) zum Ausbilden einer von der einen Konfiguration (KL1.RᵢYⱼCvₖXₗ) verschiedenen, weiteren Konfiguration der fluidischen Leitungsmatrix (L1) der Schaltung (S1) geeignet ausgebildet ist.

## Claims

1. Brake control assembly, in particular for rail vehicles,
- in which a circuit (S1) has a fluidic line matrix (L1), brake components (11, 12, 13, 14, 15; 11, 12, 13, 14, 16) connected to the fluidic line matrix (L1) and at least one interface (S1R; S1Y; S1Cv; S1X) for connecting a distributor block (Rᵢ; Yⱼ; Cvₖ; Xₗ), which interface is designed such that a configuration (K.RᵢYⱼCvₖXₗ) of the fluidic line matrix can be implemented by connecting or exchanging the distributor block (Rᵢ; Yⱼ; Cvₖ; Xₗ),
• wherein the at least one interface (S1R; S1Y; S1Cv; S1X) is implemented by connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) of the fluidic line matrix,
• wherein the fluidic line matrix (L1) is constituted by a brake panel, in particular in the form of a pipe panel or a bore panel or an adhesive panel, wherein the at least one interface (S1R; S1Y; S1Cv; S1X) with its connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) is implemented on one of the sides of the brake panel, in particular on the front or back thereof, and
• wherein in addition to the connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) by which the at least one interface is constituted, the fluidic line matrix (L1) also has connections for connecting the brake components (11, 12, 13, 14, 15; 11, 12, 13, 14, 16), wherein the connections for connecting the brake components are each implemented on one of the sides of the brake panel, in particular on the front side thereof,
- in which at least the one distributor block (Rᵢ; Yⱼ; Cvₖ; Xₗ) is provided which, by connection to the at least one interface (S1R; S1Y; S1Cv; S1X) of the circuit (S1), is suitably designed to implement the one configuration (KL1.RᵢYⱼCvₖXᵢ) of the fluidic line matrix (L1) of the circuit (S1), and
- in which the at least one distributor block (Rᵢ; Yⱼ; Cvₖ; Xₗ) is connected to the at least one interface (S1R; S1Y; S1Cv; S1X) of the circuit (S1), whereby the one configuration (KL1.RᵢYⱼCvₖXₗ) of the fluidic line matrix (L1) of the circuit (S1) is implemented by the distributor block (Rᵢ; Yⱼ; Cvₖ; Xₗ),
**characterised in that**
- the at least one distributor block (Rᵢ; Yⱼ; Cvₖ; Xₗ) is a distributor block selected from a distributor set (R; Y; Cv; X) prior to connection to the at least one interface (S1R; S1Y; S1Cv; S1X),
- wherein the distributor set (R; Y; Cv; X), in addition to the at least one distributor block (Rᵢ; Yⱼ; Cvₖ; Xₗ), has at least one further distributor block, which, by connection to the at least one interface (S1R; S1Y; S1Cv; S1X) of the circuit (S1), is suitably designed to implement a further configuration, which differs from the one configuration (KL1.RᵢYⱼCvₖXₗ), of the fluidic line matrix (L1) of the circuit (S1).

2. Brake control assembly according to claim 1,
**characterised in that**
in addition to the connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) by which the at least one interface is constituted, the fluidic line matrix (L1) also has connections for connecting connecting lines (VL4, VL6, VL7, VL8, VL9, VL10, VL11, VL12) assigned to the circuit, wherein the connections for connecting connecting lines assigned to the circuit are each implemented on one of the sides of the brake panel.

3. Brake control assembly according to claim 1,
**characterised in that**
the distributor block (Rᵢ; Yⱼ; Cvₖ; Xₗ)is implemented as a passive component.

4. Brake control assembly according to claim 1 or 3,
**characterised in that**
the distributor block (Rᵢ; Yⱼ; Cvₖ; Xₗ) is produced in one piece, in particular by a 3D printing process.

5. Brake control assembly according to claim 1,
**characterised in that**
each of the distributor blocks (Rᵢ where i=1 to nR; Yⱼ where j=1 to nY; Cvₖ where k=1 to nCv; Xₗ where l=1 to nX) of the distributor set (R; Y; Cv; X) has, incorporated in the distributor block, a duct matrix (KRᵢ; KYⱼ; KCvₖ; KXₗ) comprising ports (KRᵢa, KRᵢb, KRᵢc, KRᵢd; KYⱼa, KYⱼb, KYⱼc, KYⱼd; KCvₖa, KCvₖb, KCvₖc, KCvₖd; KXₗa, KXₗb, KXₗc) for connection to assigned connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) of the fluidic line matrix (L1) of the circuit.

6. Brake control assembly according to claim 5,
**characterised in that**
for each of the distributor blocks (Rᵢ where i=1 to nR; Yⱼ where j=1 to nY; Cvₖ where k=1 to nCv; Xₗ where l=1 to nX) of the distributor set (R; Y; Cv; X) at least two of the ports are connected via a connecting duct (VK1.Rᵢ; VK1.Yⱼ; VK1.Cvₖ; VK1.Xₗ) of the duct matrix and
for at least one of the distributor blocks two other of the ports are connected via another connecting duct (VK2.R₄, VK2.Y₂) of the duct matrix or at least one other of the ports is made blind, in particular connected to a blind duct (BK1.R₁, BK1.R₂; BK1.Y₁, BK2.Y₁; BK1.Cv₂, BK1.Cv₃) of the duct matrix.

7. Brake control assembly according to claim 1,
**characterised in that**
a first interface (S1R) and a first distributor block (Rᵢ) connected to the first interface are implemented as mutually assigned means of providing a configuration of flow paths for the pressurised air provided as supply air by a brake air reservoir (9).

8. Brake control assembly according to claim 1 or 7,
**characterised in that**
a second interface (S1Y) and a second distributor block (Yj) connected to the second interface are implemented as mutually assigned means of providing a configuration of flow paths for the pressurised pilot control air provided by a control valve (22).

9. Brake control assembly according to claim 1 or one of claims 7 to 8,
**characterised in that**
a third interface (S1Cv) and a third distributor block (Cvₖ) connected to the third interface are implemented as mutually assigned means of providing a configuration of flow paths for pressurised air which is provided as supply air for connected controllers and/or brake pressure regulators (11, 12, 31, 41, 51).

10. Brake control assembly according to claim 1 or one of claims 7 to 9 ,
**characterised in that**
a fourth interface (S1X) and a fourth distributor block (Xl) connected to the fourth interface are provided as mutually assigned means of providing a configuration of at least one other flow path for pressurised air which is provided as supply air for connected controllers and/or brake pressure regulators (11, 12, 31, 41, 51).

11. Rail vehicle (1),
**characterised by**
a brake control assembly according to one of claims 1 to 10.

12. Rail vehicle (1) according to claim 11,
**characterised in that**
the brake control assembly is implemented as part of a brake equipment panel, in particular as a module (M1) of a brake equipment panel.

13. Method for creating a brake control assembly, in particular for rail vehicles (1),
- in which a circuit (S1) is provided, which has a fluidic line matrix (L1), brake components (11, 12, 13, 14, 15; 11, 12, 13, 14, 16) connected to the fluidic line matrix (L1) and at least one interface (S1R; S1Y; S1Cv; S1X) for connecting a distributor block (Rᵢ; Yⱼ; Cvₖ; Xₗ), which interface is designed such that a configuration (KL1.RᵢYⱼCvₖXₗ) of the fluidic line matrix can be implemented by connecting or exchanging the distributor block (S1R; S1Y; S1Cv; S1X),
• wherein the at least one interface (S1R; S1Y; S1Cv; S1X) is implemented by connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) of the fluidic line matrix,
• wherein the fluidic line matrix (L1) is constituted by a brake panel, in particular in the form of a pipe panel or a bore panel or an adhesive panel, wherein the at least one interface (S1R; S1Y; S1Cv; S1X) with its connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) is implemented on one of the sides of the brake panel, in particular on the front or back thereof, and
• wherein in addition to the connections (S1Ra, S1Rb, S1Rc, S1Rd; S1Ya, S1Yb, S1Yc, S1Yd; S1Cva, S1Cvb, S1Cvc, S1Cvd; S1Xa, S1Xb, S1Xc) by which the at least one interface is constituted, the fluidic line matrix (L1) also has connections for connecting the brake components (11, 12, 13, 14, 15; 11, 12, 13, 14, 16), wherein the connections for connecting the brake components are each implemented on one of the sides of the brake panel, in particular on the front side thereof,
- in which at least the one distributor block (Rᵢ; Yⱼ; Cvₖ; Xₗ) is provided which, by connection to the at least one interface (S1R; S1Y; S1Cv; S1X) of the circuit (S1), is suitably designed to implement the one configuration (KL1.RᵢYⱼCvₖXᵢ) of the fluidic line matrix (L1) of the circuit (S1), and
- in which the at least one distributor block (Rᵢ; Yⱼ; Cvₖ; Xₗ) is connected to the at least one interface (S1R; S1Y; S1Cv; S1X) of the circuit (S1) and as a result the one configuration (KL1.RᵢYⱼCvₖXₗ) of the fluidic line matrix (L1) of the circuit (S1) is implemented by the distributor block (Rᵢ; Yⱼ; Cvₖ; Xₗ),
**characterised in that**
- the at least one distributor block (Rᵢ; Yⱼ; Cvₖ; Xₗ) is selected from a distributor set (R; Y; Cv; X) prior to connection to the at least one interface (S1R; S1Y; S1Cv; S1X),
- wherein the distributor set (R; Y; Cv; X), in addition to the at least one distributor block (Rᵢ; Yⱼ; Cvₖ; Xₗ), has at least one further distributor block, which, by connection to the at least one interface (S1R; S1Y; S1Cv; S1X) of the circuit (S1), is suitably designed to implement a further configuration, which differs from the one configuration (KL1.RᵢYⱼCvₖXₗ), of the fluidic line matrix (L1) of the circuit (S1).

## Revendications

1. Dispositif de commande de frein, en particulier pour des véhicules ferroviaires,
- dans lequel un circuit (S1) comporte une matrice (L1) de conduit fluidique, des composants (11, 12, 13, 14, 15 ; 11, 12, 13, 14, 16) de frein raccordés à la matrice (L1) de conduit fluidique et au moins une interface (S1R ; S1Y ; S1Cv ; S1X) de raccordement d'un bloc (Rᵢ; Yⱼ ; Cvₖ ; X₁) répartiteur, qui est conformé de manière à pouvoir, par le raccordement ou le remplacement du bloc (Rᵢ ; Yⱼ ; Cvₖ ; X₁) répartiteur former une configuration (KL1.RᵢYⱼCvₖXₗ) de la matrice de conduit fluidique,
• dans lequel la au moins une interface (S1R ; S1Y ; S1Cv ; S1X) est formée par des raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc) de la matrice de conduit fluidique,
• dans lequel la matrice (L1) de conduit fluidique est formé par un tableau de freinage, en particulier sous la forme d'un tableau de tube ou d'un tableau de trou ou d'un tableau de collage, dans lequel de l'un des côtés, en particulier du côté avant ou du côté arrière, du tableau de freinage est formé la au moins une interface (S1R ; S1Y ; S1Cv ; S1X) avec ses raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc), et
• dans lequel la matrice (L1) de conduit fluidique a supplémentairement aux raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc), par lesquels la au moins une interface est formée, également des raccords de raccordement des composants (11, 12, 13, 14, 15 ; 11, 12, 13, 14, 16) de frein, dans lequel les raccords de raccordement des composants de frein sont formés respectivement de l'un des côtés, en particulier du côté avant, du tableau de freinage,
- dans lequel au moins le un bloc (Rᵢ ; Yⱼ ; Cvₖ ; X₁) répartiteur est mis à disposition, lequel par raccordement à la au moins une interface (S1R ; S1Y ; S1Cv ; S1X) du circuit (S1) est propre à constituer la une configuration (KL1.RᵢYⱼCvkX₁) de la matrice (L1) de conduit fluidique du circuit (S1), et
- dans lequel le au moins un bloc (Rᵢ ; Yⱼ ; Cvₖ ; X₁) répartiteur est raccordé à la au moins une interface (S1R ; S1Y ; S1Cv ; S1X) du circuit (S1), grâce à quoi la une configuration (KL1.RᵢYⱼCvₖX₁) de la matrice (L1) de conduit fluidique du circuit (S1) est formée par le bloc (Rᵢ ; Yⱼ ; Cvₖ ; X₁) répartiteur,
**caractérisé**
- **en ce que** le au moins un bloc (Rᵢ ; Yⱼ ; Cvₖ ; X₁) répartiteur est un bloc répartiteur sélectionné parmi un ensemble (R ; Y ; Cv ; X) de répartiteur avant le raccordement à la au moins une interface (S1R ; S1Y ; S1Cv ; S1X),
- dans lequel l'ensemble (R ; Y ; Cv ; X) de répartiteur a supplémentairement au au moins un bloc (Rᵢ ; Yⱼ ; Cvₖ ; X₁) répartiteur au moins un autre bloc répartiteur, lequel est, par raccordement à la au moins une interface (S1R ; S1Y ; S1Cv ; S1X) du circuit (S1), constitué de manière appropriée à la formation d'une autre configuration, différente de la une configuration (KL1.RᵢYⱼCvₖX₁), de la matrice (L1) de conduit fluidique du circuit (S1).

2. Dispositif de commande de frein suivant la revendication 1,
**caractérisé en ce que**
la matrice (L1) de conduit fluidique a, supplémentairement aux raccords (S1Ra, S1Rb, S1Rc, S1Rd ; S1Ya, S1Yb, S1Yc, S1Yd ; S1Cva, SICvb, S1Cvc, S1Cvd ; S1Xa, S1Xb, S1Xc), par lesquels au moins une interface est formée, également des raccords pour le raccordement de lignes (VL4, VL6, VL7, VL8, VL9, VL10, VL11, VL12) de liaison associées au circuit, dans lequel les raccords de raccordement des lignes de liaison associées au circuit sont formés respectivement de l'un des côtés du tableau de freinage.

3. Dispositif de commande de frein suivant la revendication 1,
**caractérisé en ce que**
le bloc (Rᵢ ; Yⱼ ; Cvₖ ; X₁) répartiteur est constitué sous la forme d'un composant passif.

4. Dispositif de commande de frein suivant la revendication 1 ou 3,
**caractérisé en ce que**
le bloc (Rᵢ ; Yⱼ ; Cvₖ ; X₁) répartiteur est fabriqué en une seule pièce, en particulier par un procédé d'impression en 3D.

5. Dispositif de commande de frein suivant la revendication 1,
**caractérisé en ce que**
chacun des blocs (Rᵢ avec i=1 à nR ; Yⱼ avec j=1 à nY ; Cvₖ avec k=1 à nCv ; X₁ avec l=1 à nX) répartiteurs de l'ensemble (R ; Y ; Cv ; X) de répartiteurs a une matrice (KRᵢ ; KYⱼ ; KCvₖ ; KX₁) de canal usiné dans le bloc répartiteur et ayant des raccords (KRᵢa, KRᵢb, KRᵢc, KRᵢd ; KYⱼa, KYⱼb, KYⱼc, KYⱼd ; KCvₖa, KCvₖb, KCvₖc, KCvₖd ; KXᵢa, KXᵢb, KXᵢc) de canal pour des raccordement à des raccords (S1Ra, S1Rb, S1Rc, S1Rc, S1Rd ; S1Ya, S1Yb, S1Yc, S1Yd ; S1Cva, S1Cvb, S1Cvc, S1Cvd ; S1Xa, S1Xb, S1Xc) associés de la matrice (L1) de conduit fluidique du circuit.

6. Dispositif de commande de frein suivant la revendication 5,
**caractérisé en ce que**
pour chacun des blocs (Rᵢ avec i=1 à nR ; Yⱼ avec j=1 à nY ; Cvₖ avec k=1 à nCv ; X₁ avec l=1 à nX) répartiteurs de l'ensemble (R ; Y ; Cv ; X) de répartiteurs, au moins deux des raccords de canal sont reliés à la matrice de canal par un canal (VK1.Rᵢ ; VK1.Yⱼ ; VK1.Cvₖ ; VK1.X₁) de liaison et pour au moins l'un des blocs répartiteurs, deux autres des raccords de canal sont reliés par un autre canal (VK2.R₄, VK2.Y₂) de liaison de la matrice de canal ou au moins un autre des raccords de canal est borgne, en étant relié, en particulier à un canal (BK1.R₁, BK1.R₂ ; BK1.Y₁, BK2.Y₁ ; BK1.Cv₂, BK1.Cv₃) borgne de la matrice de canal.

7. Dispositif de commande de frein suivant la revendication 1,
**caractérisé en ce qu'**
une première interface (S1R) et un premier bloc (Rᵢ) répartiteur, raccordé à la première interface, sont constitués en moyens, associés l'un à l'autre, de mise à disposition d'une configuration de chemins d'écoulement de l'air comprimé mis à disposition comme air d'alimentation par un réservoir (9) d'air de freinage.

8. Dispositif de commande de frein suivant la revendication 1 ou 7,
**caractérisé par**
une deuxième interface (S1Y) et un deuxième bloc (Yⱼ) répartiteur, raccordé à la deuxième interface, sont constitués comme moyens, associés l'un à l'autre, de mise à disposition d'une configuration de chemins d'écoulement de l'air comprimé pilote mis à disposition par une soupape (22) pilote.

9. Dispositif de commande de frein suivant la revendication 1 ou l'une des revendications 7 à 8,
**caractérisé en ce qu'**
une troisième interface (S1Cv) et un troisième bloc (Cvₖ) répartiteur, raccordé à la troisième interface, sont constitués en moyens, associés l'un à l'autre, de mise à disposition d'une configuration de chemins d'écoulement de l'air comprimé, qui est mis à disposition comme air d'alimentation de commandes et/ou de régleurs (11, 12, 31, 41, 51) raccordés de la pression de freinage.

10. Dispositif de commande de frein suivant la revendication 1 ou l'une des revendications 7 à 9,
**caractérisé en ce qu'**
une quatrième interface (S1X) et un quatrième bloc (X₁) répartiteur, raccordé à la quatrième interface, sont constitués, comme moyens associés l'un à l'autre, de mise à disposition d'une configuration d'au moins un autre chemin d'écoulement de l'air comprimé, qui est mis à disposition comme air d'alimentation de commandes et/ou de régleurs (11, 12, 31, 41, 51) raccordés de la pression de freinage.

11. Véhicule (1) ferroviaire,
**caractérisé par**
un dispositif de commande de frein suivant l'une des revendications 1 à 10.

12. Véhicule (1) ferroviaire suivant la revendication 11,
**caractérisé en ce que**
le dispositif de commande de frein est constitué sous la forme d'une partie d'un tableau d'appareil de freinage, en particulier sous la forme d'un module (M1) d'un tableau d'appareil de freinage.

13. Procédé de formation d'un dispositif de commande de frein, en particulier pour des véhicules (1) ferroviaires,
- dans lequel on se procure un circuit (S1), qui a une matrice (L1) de conduit fluidique, des composants (11, 12, 13, 14, 15 ; 11, 12, 13, 14, 16) de frein raccordés à la matrice (L1) de conduit fluidique et au moins une interface (S1R ; S1Y ; S1Cv ; S1X) de raccordement d'un bloc (Rᵢ ; Yⱼ ; Cvₖ ; X₁) répartiteur, qui est conformé de manière à pouvoir, par le raccordement ou le remplacement du bloc (Rᵢ ; Yⱼ ; Cvₖ ; X₁) répartiteur former une configuration (KL1.RᵢYⱼCvkX₁) de la matrice de conduit fluidique,
• dans lequel la au moins une interface (S1R ; S1Y ; S1Cv ; S1X) est formée par des raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc) de la matrice de conduit fluidique,
• dans lequel la matrice (L1) de conduit fluidique est formé par un tableau de freinage, en particulier sous la forme d'un tableau de tube ou d'un tableau de trou ou d'un tableau de collage, dans lequel de l'un des côtés, en particulier du côté avant ou du côté arrière, du tableau de freinage est formé la au moins une interface (S1R ; S1Y ; S1Cv ; S1X) avec ses raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc), et
• dans lequel la matrice (L1) de conduit fluidique a supplémentaire aux raccords (S1Ra, S1Rb, S1Rc, S1Rd ; S1Ya, S1Yb, S1Yc, S1Yd ; S1Cva, S1Cvb, S1Cvc, S1Cvd ; S1Xa, S1Xb, S1Xc), par lesquels la au moins une interface est formée, également des raccords de raccordement des composants (11, 12, 13, 14, 15 ; 11, 12, 13, 14, 16) de frein, dans lequel les raccords de raccordement des composants de frein sont formés respectivement de l'un des côtés, en particulier du côté avant, du tableau de freinage,
- dans lequel au moins le un bloc (Rᵢ ; Yⱼ ; Cvₖ ; X₁) répartiteur est mis à disposition, lequel par raccordement à la au moins une interface (S1R ; S1Y ; S1Cv ; S1X) du circuit (S1) est propre à constituer la une configuration (KL1.RᵢYⱼCvₖXᵢ) de la matrice (L1) de conduit fluidique du circuit (S1), et
- dans lequel le au moins un bloc (Rᵢ ; Yⱼ ; Cvₖ ; X₁) répartiteur est raccordé à la au moins une interface (S1R ; S1Y ; S1Cv ; S1X) du circuit (S1), grâce à quoi la une configuration (KL1.RᵢYⱼCvkX₁) de la matrice de conduit fluidique du circuit (S1) est formée par le bloc (Rᵢ ; Yⱼ ; Cvₖ ; X₁) répartiteur,
**caractérisé**
- **en ce que** l'on choisit le au moins un bloc (Rᵢ ; Yⱼ ; Cvₖ ; X₁) répartiteur parmi un ensemble (R ; Y ; Cv ; X) de répartiteurs avant le raccordement à la au moins une interface (S1R ; S1Y ; S1Cv ; S1X),
- dans lequel l'ensemble (R ; Y ; Cv ; X) de répartiteur a supplémentairement au au moins un bloc (Rᵢ ; Yⱼ ; Cvₖ ; X₁) répartiteur au moins un autre bloc répartiteur, lequel est, par raccordement à la au moins une interface (S1R ; S1Y ; S1Cv ; S1X) du circuit (S1), constitué de manière appropriée à la formation d'une autre configuration, différente de la une configuration (KL1.RᵢYⱼCvₖX₁), de la matrice (L1) de conduit fluidique du circuit (S1).
